# EUROPÄISCHE PATENTSCHRIFT

(11) **EP 2 427 356 B1**
(45) Veröffentlichungstag und Bekanntmachung des Hinweises auf die Patenterteilung: **12.04.2017**
(21) Anmeldenummer: 10718954.0
(22) Anmeldetag: 29.04.2010
(51) Int. Cl.: B60T 8/1755

(54) **VERFAHREN UND VORRICHTUNG ZUR REGELUNG BZW. STEUERUNG DER FAHRSTABILITÄT EINES FAHRZEUGS**
METHOD AND APPARATUS FOR REGULATING OR CONTROLLING THE DRIVING STABILITY OF A VEHICLE
PROCÉDÉ ET DISPOSITIF DE RÉGULATION OU DE COMMANDE DE LA STABILITÉ DIRECTIONNELLE D'UN VÉHICULE

(30) Priorität: 07.05.2009 DE 102009020210
(43) Veröffentlichungstag der Anmeldung: 14.03.2012
(73) Patentinhaber: Continental Teves AG & Co. oHG, 60488 Frankfurt (DE)
(72) Erfinder: HARTMANN, Bernhard, 61348 Bad Homburg (DE); ECKERT, Alfred, 55129 Mainz-Hechtsheim (DE); FRITZ, Stefan, 64390 Erzhausen (DE); ROLL, Georg, 60438 Frankfurt (DE)
(86) Internationale Anmeldenummer: PCT/EP2010/055841
(87) Internationale Veröffentlichungsnummer: WO 2010/127994

(56) Entgegenhaltungen:
- WO-A1-2004/085220
- WO-A1-2005/080133
- DE-A1-102005 037 479
- US-A1- 2004 193 374
- US-A1- 2005 267 683
- US-A1- 2007 294 019

## Beschreibung

Die Erfindung betrifft ein Verfahren zur Regelung bzw. Steuerung der Fahrstabilität eines Fahrzeuges und zur Kollisionsvermeidung mit einem in der Fahrspur befindlichen Objekt, mit den Schritten,
Ermitteln anhand von Umfeldsignalen ob eine fahrdynamisch kritische Situation, insbesondere eine bevorstehende Kollision, vorliegt,
Berechnen einer Ausweichbahn bei vorliegender fahrdynamisch kritischer Situation,
Ermitteln anhand von mehreren Eingangsgrößen Drücke für einzelnen Bremsen des Fahrzeuges,
Aktivieren von vorbereitenden Maßnahmen des
Fahrdynamikreglers, insbesondere dynamisches Umschalten von Regelparametern, wenn die fahrdynamisch kritische Situation vorliegt.

Zur Durchführung eines derartigen Verfahrens wird in der Regel eine Vorrichtung zur Fahrstabilitätsregelung und Kollisionsvermeidung benötigt, mit einem Fahrstabilitätsregler der Mittel zur Erfassung von Eingangsgrößen und zur Festlegung von Eingriffen in einzelne Bremsen des Fahrzeuges enthält und mit einer das Umfeld des Fahrzeugs erfassenden Sensorik, die Radar- oder Lidarsignale aussendet und empfängt oder Videosignale empfängt.

Unter einer das Umfeld des Fahrzeugs erfassenden Sensorik werden Radar-Sensoren, Lidar-Sensoren, Video- bzw. kamerabasierte, fusionierte oder andere optische Sensoren verstanden. Die Sensoren können die Informationen mittels des eigenen Fahrzeugs aussenden und empfangen oder über eine Fahrzeug zu Fahrzeug Kommunikation oder Fahrzeug zu Infrastruktur Kommunikation erhaltenen. Die das Umfeld des Fahrzeugs beschreibenden Signale können darüber hinaus über ein satelliten- und navigationsgestütztes System an die Infrastruktur oder an nachfolgende Fahrzeuge weitergegeben werden.

Das Verfahren dient insbesondere dazu, durch gezielte Eingriffe an einzelnen Bremsen des Fahrzeuges ein zusätzliches Drehmoment zu schaffen, so dass eine Fahrstabilität des Fahrzeuges erhöht und eine Kollision mit einem in der Fahrspur befindlichen Objekt vermieden wird. Der Begriff Fahrstabilitätsregelung umfasst insbesondere die nachfolgend genannten Prinzipien zur Beeinflussung des Fahrverhaltens des Fahrzeuges. Dabei handelt es sich vorzugsweise um eine Bremsschlupfregelung (ABS), welche während eines Bremsvorgangs das Blockieren einzelner Räder verhindern soll, um eine Antriebsschlupfregelung (ASR), welche das Durchdrehen der angetriebenen Räder verhindert, um eine elektronische Bremskraftverteilung (EBV), welche das Verhältnis der Bremskräfte zwischen Vorder- und Hinterachse des Fahrzeuges regelt sowie um eine Giermomentregelung (GMR), welche für stabile Fahrzustände beim Durchfahren einer Kurve sorgt.

Aus der US 2007/294019 A1 ist ein Verfahren der eingangs genannten Gattung bekannt. Das vorbekannte Verfahren berechnet in einem Berechnungsabschnitt die Ausweichwahrscheinlichkeit durch Lenkeingriffe und Geschwindigkeitsreduzierung in Abhängigkeit der Position des Objekts. Dabei wird die Bremskraft reduziert, wenn erkannt wird, dass das Objekt durch einen Lenkeingriff umfahren werden kann.

Aus der Deutschen Offenlegungsschrift 195 15 048 A1 ist eine Giermomentregelung bekannt, bei der Werte für einen Lenkwinkel, eine Fahrgeschwindigkeit, eine Gierwinkelgeschwindigkeit sowie eine Querbeschleunigung des Fahrzeuges gemessen, beziehungsweise ermittelt werden, wobei in Abhängigkeit vom Lenkwinkel und von der Fahrgeschwindigkeit anhand eines mathematischen Referenzmodells eine Referenz- oder Soll-Giergeschwindigkeit bestimmt wird und wobei der Differenzwert zwischen der tatsächlichen Gierwinkelgeschwindigkeit des Fahrzeuges und der Referenz- oder Soll-Gierwinkelgeschwindigkeit ermittelt wird. Anhand des Differenzwerts wird eine Drehmomentgröße berechnet, welche zur Festlegung von Bremsdrücken dient, die über die Bremsen des Fahrzeugs ein Zusatzgiermoment erzeugen. Der Inhalt der DE 195 15 048 A1 ist Bestandteil der vorliegenden Anmeldung.

Mit einer Lenkmomentunterstützung werden bereits entsprechend der Fahrstabilitätsregelung konforme Lenkwünsche an den Fahrer vermittelt (WO2002/074638). Mit einem Aktuator einer aktiven Vorderradlenkung kann ein Radlenkwinkel zur fahrdynamischen Unterstützung unabhängig vom Fahrer eingestellt werden(DE102004060053 A1, PC/EP2004050859). Dabei wird noch kein Kurs, der nicht dem vom Fahrer vorgegebenen Richtungswunsch entspricht, eingestellt.

Die Umfelderkennung, wie z.B. "Long Range Radar", erkennt ein Objekt in Fahrtrichtung. Dies wird derzeit zur Abstandsregelung (DE 102005031854 A1) als Komfortfunktion für den Fahrer genutzt, bietet aber auch die Möglichkeit eine gefährliche Annäherung an ein Objekt zu erkennen. Bei anderen bekannten Systemen wird der Radar im Bereich geringer Geschwindigkeit schon genutzt um eine gefährliche Annäherung zu detektieren und dann geeignet vor dem Objekt abzubremsen. Andere Systeme erkennen die Gefahr von Kollisionen mit einem Objekt über geeignete Umfeldsensorik, wie Radar-, Lidar- und Videosensorik, (WO2004/085220 A1), warnen den Fahrer, leiten eine automatische Teilbremsung ein und verzögern zum Schluss abhängig von der zu verbleibenden Zeit bis zur Kollision mit dem Objekt mit einer automatischen Vollbremsung um die Kollision zu verhindern oder zumindest abzuschwächen. Weitere Systeme beschäftigen sich mit Maßnahmen nach einem Erstunfall (WO2005/047066 A1, EP 0976627 A1).

In der WO2007/031580 A1 ist ein Verfahren zum Prädizieren einer Bewegungstrajektorie eines sich im Straßenverkehr bewegenden Objekts offenbart. Ferner ist eine Vorrichtung zum Prädizieren einer Bewegungstrajektorie eines sich im Straßenverkehr bewegenden Objekts, das sich zur Durchführung des Verfahrens eignet, offenbart. In der DE 102 31 556 ist ein Verfahren und eine Vorrichtung zur Prädiktion von Bewegungstrajektorien eines Fahrzeugs zur Verhinderung einer Kollision vorgeschlagen, bei welchem zur Prädiktion der Trajektorien nur die Trajektorien berücksichtigt werden, bei denen infolge einer Kombination von Brems- und Lenkeingriff die an den Rädern des Fahrzeugs auftretenden Kräfte in dem Bereich liegen, der der maximal vom Rad auf die Straße übertragbaren Kraft entspricht. Es erfolgt ein automatischer Brems- und/oder Lenkeingriff in Abhängigkeit der vorausberechneten Trajektorien.

Die Regelstrategie des eingangs beschriebenen Fahrstabilitätsreglers bzw. Giermomentreglers beinhaltet eine Reihe von Kompromissen, die einerseits für die weitaus meisten Fahrsituationen eine recht gute Stabilisierung des Fahrzeugs gewährleistet, zum anderen aber auch verhindert, dass der Fahrstabilitätsregler zu früh oder zu heftig eingreift, was zu einer Einschränkung der tolerierten Fahrdynamik oder zu Einbußen im Regelkomfort führen würde. Gerade bezüglich der mit dem Fahrzeug erreichbaren Fahrdynamik werden große Anforderungen dahingehend an den Fahrstabilitätsregler gestellt, dass die Eingriffe nicht zu einer Reduzierung einer "sportlichen" Fahrweise führen dürfen. Insbesondere müssen Regelschwellen des Fahrdynamikreglers so eingestellt werden, dass Fehlanregelungen vermieden werden, die durch Fahrbahnneigungen und sportliche Lenkvorgaben auf Rennstrecken oder Bergstraßen auftreten könnten.

Durch die Aufweitung von Regelschwellen des Fahrstabilitätsreglers oder den absichtlich zeitlich verzögerten Eingriff des Fahrstabilitätsreglers in die Bremsen oder die Lenkung des Fahrzeugs können in kritischen Situationen fahrdynamische Probleme auftreten, die mit einem sehr frühen und alle Möglichkeiten ausschöpfenden Eingriff vermeidbar gewesen wären.

Eine kritische Situation ist hierbei ein instabiler Fahrzustand, in welchem im Extremfall das Fahrzeug dem Fahrer nicht mehr folgt. Die Funktion einer Fahrstabilitätsregelung besteht also darin, innerhalb der physikalischen Grenzen in derartigen Situationen dem Fahrzeug das von dem Fahrer gewünschte Fahrverhalten zu verleihen.

Der Erfindung liegt die Aufgabe zugrunde, ein Verfahren zur Regelung bzw. Steuerung der Fahrstabilität eines Fahrzeuges dahingehend weiterzubilden, dass die Fahrstabilitätsregelung in kritischen Situationen frühzeitiger und heftiger eingreifen kann und mit der Fahrstabilitätsregelung auch eine Kollision mit in der Fahrspur befindlichen Objekten vermieden werden kann.

Erfindungsgemäß wird diese Aufgabe dadurch gelöst, dass die vorbereitenden Maßnahmen das Reduzieren von Regelschwellen und die Erhöhung der Verstärkungen und die Reduzierung von Eingriffs-Verzögerungszeiten sind.

Eine kritische Situation ist somit gemäß der Erfindung ein instabiler und ein gefährlicher Fahrzustand, in welchem im Extremfall das Fahrzeug dem Fahrer nicht mehr folgt und/oder eine Kollision mit einem Objekt sensiert wurde. Die Funktion der erfindungsgemäßen Fahrstabilitätsregelung besteht also darin, innerhalb der physikalischen Grenzen in derartigen Situationen dem Fahrzeug das von dem Fahrer gewünschte Fahrverhalten zu verleihen und/oder das Fahrzeug entlang einer Trajektorie zu zwingen, um eine Kollision zu verhindern.

Ein wesentlicher Gedanke der Erfindung besteht darin, eine Vernetzung des Fahrdynamikreglers mit einer Umfeldsensorik vorzunehmen. Diese Vernetzung erlaubt es, bei gefährlichen und kritischen Situationen die Auslegung des Fahrstabilitätsreglers stark in Richtung "stabilität" zu ungunsten des Komforts zu konfigurieren. Dabei ermittelt der Fahrstabilitätsregler oder die Umfeldsensorik auf Basis bekannter Umfeldinformationen ob die aktuelle Fahrsituation gefährlich und/oder kritisch ist oder nicht. Wenn die Auswertung der Fahrsituation ergeben hat, dass eine gefährliche und/oder kritische Situation vorliegt, können zahlreiche Regelparameter der Fahrstabilitätsregelung proaktiv schon im Vorfeld als quasi vorbereitende Maßnahme auf die bevorstehende Gefahrensituation dynamisch umgeschaltet werden. Die Empfindlichkeit des Fahrstabilitätsreglers wird dabei in wenigstens einem Betriebszustand des Fahrzeugs durch wenigstens ein Signal der Umfeldsensorik beeinflusst. Die Gefahrensituation kann dabei ein bevorstehendes Notausweichmanöver sein.

Anhand einer Ausweichbahn bzw. Wunsch- oder Solltrajektorie wird bevorzugt eine Soll-Giergeschwindigkeit des Fahrzeugs berechnet, welche der Regelung der Fahrstabilität zur Verfügung gestellt wird. Der Fahrdynamikregler vergleicht diese nach der Wunschtrajektorie berechnete Soll-Gierwinkelgeschwindigkeit mit einer gemessenen Ist-Gierwinkelgeschwindigkeit, wobei der festgestellte Differenzwert einer Berechnungseinheit zugeführt wird, in der eine Drehmomentengröße berechnet wird, welche zur Festlegung von Drücken dient, die über die Bremsen des Fahrzeugs ein Zusatzgiermoment erzeugen, welches die gemessene Gierwinkelgeschwindigkeit zu der die Ausweichbahn oder Wunschtrajektorie wiedergebende Soll-Gierwinkelgeschwindigkeit hinführt.

Anstatt einer nach der Wunschtrajektorie berechneten SollGierrate kann bei Fahrzeugen mit automatisch verstellbarer Vorderradlenkung ein Soll-Lenkwinkel des Fahrzeugs berechnet werden, welcher der Regelung der Fahrstabilität und Kollisionsvermeidung zur Verfügung gestellt wird. Entsprechend wird der Soll-Lenkwinkel mit einem ermittelten Ist-Lenkwinkel verglichen, wobei der festgestellte Differenzwert einer Berechnungseinheit zugeführt wird, in der eine Verstellgröße berechnet wird, welche zur Festlegung eines Lenkwinkels dient, der über ein aktives Lenksystem des Fahrzeugs an den Rädern eingestellt wird, und welches den ermittelten Ist-Lenkwinkel zu dem die Wunschtrajektorie wiedergebenden Soll-Lenkwinkel hinführt.

In einer besonderen Ausführung der Erfindung wird die Sollgierrate, die das Fahrzeug auf die Wunschtrajektorie zwingt, nur dann vorgegeben, wenn der Fahrer dies dadurch auslöst, dass er diesen Kurs auch zumindest ansatzweise einschlägt, das heißt, der Fahrer muss zumindest in der ersten Anlenkphase in die richtige Richtung lenken und nicht etwa sich völlig passiv verhalten oder gar in die Gegenrichtung lenken.

Ein Fahrstabilitätsregler für ein Fahrzeug mit mindestens vier Rädern zur Durchführung des Verfahrens, weist mindestens einen Sensor, der ein Giergeschwindigkeitssignal erzeugt, mindestens einen Sensor, der ein Querbeschleunigungssignal erzeugt, mindestens einen Sensor, der ein Lenkwinkelsignal bzw. Lenkwinkelgeschwindigkeitssignal erzeugt, mindestens Raddrehzahlsensoren, die Drehbewegungssignale der Räder erzeugen, auf. Weiterhin weist der Fahrstabilitätsregler ein ABS-Regelsystem und ein ASR-Regelsystem und ein GMR-Regelsystem, auf. Die Regelsysteme sind mit den Sensoren verbunden, wobei das GMR Regelsystem bzw. der Fahrstabilitätsregler mit einer Umfeldsensorik verbunden ist. Innerhalb des Fahrstabilitätsreglers ist eine Berechnungseinheit, z.B. ein Fahrzeugmodell, vorgesehen, wobei ein modellbasierter Reibwert ermittelt wird, dessen Ausgangssignale (*µ*) der Berechnungseinheit bzw. dem Fahrzeugmodell zugeführt werden und damit bei der Berechnung des Sollwerts der Gierwinkelgeschwindigkeit (*ψ̇* soll) berücksichtigt wird.

Damit der Fahrstabilitätsregler zur Durchführung des Verfahrens möglichst früh und hart eingreift, wenn eine gefährliche und/oder kritische Situation, wie ein Ausweichmanöver auf engem Raum, ermittelt wird, ist vorgesehen, dass die vorbereitenden Maßnahmen das Reduzieren von Regelschwellen bzw. Parametern ist. Als ein Parameter kann beispielsweise der bei der Sollgiergeschwindigkeitsvorgabe für die Ausweich- bzw. Wunschtrajektorie - insbesondere in der Gegenlenkphase - ermittelte Reibwert modifiziert werden. Der maximale Reibwert wird gegenüber dem tatsächlich geschätzten Reibwert reduziert, also statt z.B. *µ*=1.0 auf Hochreibwertfahrbahnen wird nur der Maximalwert *µ*= 0.7 oder 0.8 erlaubt. Diese Reibwertbeschränkung reduziert indirekt die maximale Gierwinkelgeschwindigkeit bzw. Gierrate und damit auch die maximale Querdynamik des Fahrzeugs. Dies führt - speziell beim Gegenlenkmanöver - zu einem sehr frühen und harten GMR-Eingriff der ein Ausbrechen des Fahrzeughecks stark unterdrückt.

Das Verfahren der Reibwertreduzierung führt generell zu einem harten GMR-Eingriff, damit zu einer Begrenzung der Fahrzeugdynamik und zu einem extrem stabilen Fahrverhalten. Dabei kann die Sollgierrate sowohl auf Basis der Trajektorie als auch nach wie vor auf Basis des Fahrerwunsches (Fahrerlenkwinkel) erfolgen. Beide Verfahren sind grundsätzlich möglich und begrenzen die Fahrzeugdynamik sehr effektiv.

Damit der Fahrstabilitätsregler zur Durchführung des Verfahrens möglichst früh und hart eingreift, wenn eine kritische Situation, wie ein Ausweichmanöver auf engem Raum, ermittelt wird, ist vorteilhaft vorgesehen, dass die vorbereitenden Maßnahmen die Reduzierung, insbesondere auf Null, von Eingriffs-Verzögerungszeiten ist.

Damit der Fahrstabilitätsregler zur Durchführung des Verfahrens möglichst früh und hart eingreift, wenn eine kritische Situation, wie ein Ausweichmanöver auf engem Raum, ermittelt wird, ist weiterhin vorteilhaft vorgesehen, dass die vorbereitenden Maßnahmen in einer Steuerung bzw. Regelung mit Vorsteueranteilen besteht, die aus der Lenkwinkelvorgabe des Fahrers berechnet werden. Dabei werden der absolute Lenkwinkel und die Lenkwinkelgeschwindigkeit berücksichtigt.

Eine zweckmäßige Ausführungsform des Verfahrens zeichnet sich dadurch aus, dass die vorbereitende Maßnahme eine Vorbefüllung der Bremsen ist.

Weitere Vorteile, Besonderheiten und zweckmäßige Weiterbildungen der Erfindung ergeben sich aus den Unteransprüchen und der nachfolgenden Darstellung eines Ausführungsbeispiels.

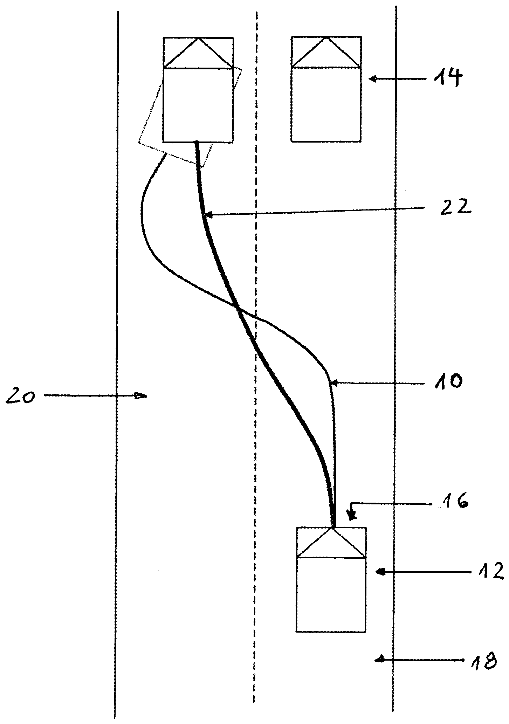

In Figur 1 ist ein Beispiel eines Ausweichmanövers des Fahrzeugs 12 mit einer Trajektorie 10, die sich durch die Fahrervorgabe ergibt, dargestellt. Das Fahrzeug 12 weist einen in seiner Grundfunktion bekannten Giermomentregler, wie er beispielsweise in der DE 195 15 048 A1 beschrieben ist, auf. Dabei ist das Hindernis, z.B. ein Stauende, mit 14, die Fahrspur des Fahrzeugs 12 mit 18 und die Ausweichspur mit 20 bezeichnet. Das Fahrzeug 12 ist mit mindestens einem an sich bekannten Umfeldsensor 16 ausgestattet, der das Umfeld des Fahrzeugs erfasst. Die Signale des Umfeldsensors bzw. die fusionierten Signale der Umfeldsensoren werden Mitteln bzw. einer Berechnungseinheit zugeführt, die in dem gegenüber dem in der DE 195 15 048 A1 beschriebenen Giermomentregler

modifizierten GMR-Regler enthalten ist. Die Berechnungseinheit empfängt die Signale der Sensorik und wertet diese im Hinblick auf ein Gefahrenpotential aus, d.h. ob eine fahrdynamisch kritische Situation, insbesondere eine bevorstehende Kollision mit dem Hindernis 14, vorliegt. Liegt die fahrdynamisch kritische Situation vor, werden vorbereitende Maßnahmen des GMR-Reglers eingeleitet, indem eine optimale Solltrajektorie 22 als Ausweichbahn berechnet wird, anhand von mehreren Eingangsgrößen Drücke für einzelnen Bremsen des Fahrzeuges ermittelt werden und indem die Regelparameter dynamisch umgeschaltet werden. Das dynamische Umschalten der Regelparameter besteht in der Reduzierung von Regelschwellen. Dabei werden die Verstärkungen erhöht und die Eingriffs-Verzögerungszeiten reduziert. Vorteilhaft werden die Eingriffs-Verzögerungszeiten auf Null reduziert. Weiterhin bestehen die vorbereitenden Maßnahmen in einer Steuerung bzw. Regelung mit Vorsteueranteilen, die aus der Lenkwinkelvorgabe des Fahrers berechnet werden, wobei die Steuerung bzw. Regelung mit Vorsteueranteilen den absoluten Lenkwinkel und die Lenkwinkelgeschwindigkeit berücksichtigt. Ferner bestehen die vorbereitenden Maßnahmen eine Vorbefüllung der Bremsen.

In der Berechnungseinheit des GMR-Rglers wird anhand der Ausweichbahn eine Soll-Giergeschwindigkeit des Fahrzeugs berechnet, welche der Regelung der Fahrstabilität zur Verfügung gestellt wird. Dabei wird die Soll-Gierwinkelgeschwindigkeit mit einer gemessenen Ist-Gierwinkelgeschwindigkeit verglichen, wobei der festgestellte Differenzwert der Berechnungseinheit zugeführt wird, in der eine Drehmomentgröße berechnet wird, welche zur Festlegung von Drücken dient, die über die Bremsen des Fahrzeugs ein Zusatzgiermoment erzeugen, welches die gemessene Gierwinkelgeschwindigkeit zu der die Ausweichbahn 22 wiedergebende Soll-Gierwinkelgeschwindigkeit hinführt. Zusätzlich oder anstatt kann anhand der Ausweichbahn ein Soll-Lenkwinkel des Fahrzeugs berechnet werden, welcher der Regelung der Fahrstabilität zur Verfügung gestellt wird. Dieser Soll-Lenkwinkel wird mit einem ermittelten Ist-Lenkwinkel verglichen wird, wobei der festgestellte Differenzwert der Berechnungseinheit zugeführt wird, in der eine Verstellgröße berechnet wird, welche zur Festlegung eines Lenkwinkels dient, der über ein aktives Lenksystem des Fahrzeugs an den Rädern eingestellt wird, und welches den ermittelten Ist-Lenkwinkel zu dem die Ausweichbahn 22 wiedergebenden Soll-Lenkwinkel hinführt.

## Patentansprüche

1. Verfahren zur Regelung bzw. Steuerung der Fahrstabilität eines Fahrzeuges und zur Kollisionsvermeidung mit einem in der Fahrspur befindlichen Objekt, mit den Schritten, Ermitteln anhand von Umfeldsignalen ob eine fahrdynamisch kritische Situation, insbesondere eine bevorstehende Kollision, vorliegt,
Berechnen einer Ausweichbahn bei vorliegender fahrdynamisch kritischer Situation,
Ermitteln anhand von mehreren Eingangsgrößen Drücke für einzelnen Bremsen des Fahrzeuges,
Aktivieren von vorbereitenden Maßnahmen des Fahrdynamikreglers, insbesondere dynamisches Umschalten von Regelparametern, wenn die fahrdynamisch kritische Situation vorliegt, **dadurch gekennzeichnet, dass** die vorbereitenden Maßnahmen das Reduzieren von Regelschwellen und die Erhöhung der Verstärkungen und die Reduzierung von Eingriffs-Verzögerungszeiten sind.

2. Verfahren nach Anspruch 1, **dadurch gekennzeichnet, dass** die Eingriffs-Verzögerungszeiten auf Null reduziert werden.

3. Verfahren nach Anspruch 1 oder 2, **dadurch gekennzeichnet, dass** die vorbereitenden Maßnahmen in einer Steuerung bzw. Regelung mit Vorsteueranteilen besteht, die aus der Lenkwinkelvorgabe des Fahrers berechnet werden.

4. Verfahren nach Anspruch 3, **dadurch gekennzeichnet, dass** die Steuerung bzw. Regelung mit Vorsteueranteilen den absoluten Lenkwinkel und die Lenkwinkelgeschwindigkeit berücksichtigt.

5. Verfahren nach einem oder mehreren der Ansprüche 1 bis 4, **dadurch gekennzeichnet, dass** die vorbereitenden Maßnahmen eine Vorbefüllung der Bremsen sind.

6. Verfahren nach einem oder mehreren der Ansprüche 1 bis 4, **dadurch gekennzeichnet, dass** anhand der Ausweichbahn eine Soll-Giergeschwindigkeit des Fahrzeugs berechnet wird, welche der Regelung der Fahrstabilität zur Verfügung gestellt wird.

7. Verfahren nach einem oder mehreren der Ansprüche 1 bis 6, **dadurch gekennzeichnet, dass** die Soll-Gierwinkelgeschwindigkeit mit einer gemessenen Ist-Gierwinkelgeschwindigkeit verglichen wird, wobei der festgestellte Differenzwert einer Berechnungseinheit zugeführt wird, in der eine Drehmomentengröße berechnet wird, welche zur Festlegung von Drücken dient, die über die Bremsen des Fahrzeugs ein Zusatzgiermoment erzeugen, welches die gemessene Gierwinkelgeschwindigkeit zu der die Ausweichbahn wiedergebende Soll-Gierwinkelgeschwindigkeit hinführt.

8. Verfahren nach einem oder mehreren der Ansprüche 1 bis 4, **dadurch gekennzeichnet, dass** anhand der Ausweichbahn ein Soll-Lenkwinkel des Fahrzeugs berechnet wird, welcher der Regelung der Fahrstabilität zur Verfügung gestellt wird.

9. Verfahren nach einem oder mehreren der vorangegangenen Ansprüche, **dadurch gekennzeichnet, dass** der Soll-Lenkwinkel mit einem ermittelten Ist-Lenkwinkel verglichen wird, wobei der festgestellte Differenzwert einer Berechnungseinheit zugeführt wird, in der eine Verstellgröße berechnet wird, welche zur Festlegung eines Lenkwinkels dient, der über ein aktives Lenksystem des Fahrzeugs an den Rädern eingestellt wird, und welches den ermittelten Ist-Lenkwinkel zu dem die Ausweichbahn wiedergebenden Soll-Lenkwinkel hinführt.

## Claims

1. Method for performing open-loop or closed-loop control of the driving stability of a vehicle and for avoiding collisions with an object which is located in the traffic lane, comprising the steps:
determining based on environmental signals whether a critical situation in terms of driving dynamics, in particular an imminent collision, exists,
calculating an avoidance path if a critical situation in terms of driving dynamics exists,
determining based on a plurality of input variables pressures for individual brakes of the vehicle,
activating preparatory measures of the driving dynamics regulator, in particular dynamic switching over of closed-loop control parameters if the critical situation in terms of driving dynamics exists, **characterized in that** the preparatory measures comprise reducing closed-loop thresholds and increasing the amplifications and the reduction of intervention delay times.

2. Method according to Claim 1, **characterized in that** the intervention delay times are reduced to zero.

3. Method according to Claim 1 or 2, **characterized in that** the preparatory measures take the form of open-loop or closed-loop control with pilot-control components which are calculated from the steering angle predefined by the driver.

4. Method according to Claim 3, **characterized in that** the open-loop or closed-loop control with pilot-control components takes into account the absolute steering angle and the steering angle speed.

5. Method according to one or more of Claims 1 to 4, **characterized in that** the preparatory measures comprise pre-charging the brakes.

6. Method according to one or more of Claims 1 to 4, **characterized in that** a setpoint yaw speed of the vehicle is calculated on the basis of the avoidance path and is made available to the closed-loop control of the driving stability.

7. Method according to one or more of Claims 1 to 6, **characterized in that** the setpoint yaw angle speed is compared with a measured actual yaw angle speed, wherein the determined difference value is fed to a calculation unit in which a torque variable, which serves to define pressures which, by means of the brakes of the vehicle, generate an additional yaw torque which adds the measured yaw angle speed to the setpoint yaw angle speed which represents the avoidance path, is calculated.

8. Method according to one or more of Claims 1 to 4, **characterized in that** a setpoint steering angle of the vehicle which is made available to perform closed-loop control of the driving stability is calculated on the basis of the avoidance path.

9. Method according to one or more of the preceding claims, **characterized in that** the setpoint steering angle is compared with a determined actual steering angle, wherein the detected difference value is fed to a calculation unit in which an adjustment variable is calculated, which adjustment variable serves to define a steering angle which is set at the wheels by means of an active steering system of the vehicle, and which method feeds the determined actual steering angle to the setpoint steering angle which represents the avoidance path.

## Revendications

1. Procédé de régulation et/ou de commande de la stabilité directionnelle d'un véhicule et d'évitement de choc avec un objet se trouvant sur la voie de circulation, avec les étapes suivantes :
détermination, à l'aide de signaux environnementaux, de la présence d'une situation critique en terme de dynamique de conduite, notamment d'un choc imminent ;
calcul d'une trajectoire d'évitement en présence de la situation critique en terme de dynamique de conduite ;
détermination, à l'aide de plusieurs grandeurs d'entrée, des pressions des freins individuels du véhicule ;
activation de mesures de préparation du système de régulation de dynamique de conduite, notamment commutation dynamique de paramètres de régulation, en présence de la situation critique en terme de dynamique de conduite, **caractérisé en ce que** les mesures de préparation sont la réduction des seuils de régulation et l'augmentation de l'amplification et la réduction des temps de retardement d'intervention.

2. Procédé selon la revendication 1, **caractérisé en ce que** les temps de retardement d'intervention sont réduits à zéro.

3. Procédé selon la revendication 1 ou 2, **caractérisé en ce que** les mesures de préparation se composent d'une commande et/ou régulation avec des parts de précommande calculées à partir de l'objectif d'angle de braquage du conducteur.

4. Procédé selon la revendication 3, **caractérisé en ce que** la commande et/ou la régulation avec des parts de précommande prennent en compte l'angle de braquage absolu et la vitesse angulaire de braquage.

5. Procédé selon l'une quelconque des revendications 1 à 4 ou plusieurs d'entre elles, **caractérisé en ce que** les mesures de préparation sont un préremplissage des freins.

6. Procédé selon l'une quelconque des revendications 1 à 4 ou plusieurs d'entre elles, **caractérisé en ce qu'**à l'aide de la trajectoire d'évitement, une vitesse de lacet théorique du véhicule est calculée, cette vitesse étant mise à disposition de la régulation de la stabilité directionnelle.

7. Procédé selon l'une quelconque des revendications 1 à 6 ou plusieurs d'entre elles, **caractérisé en ce que** la vitesse angulaire de lacet théorique est comparée à une vitesse angulaire de lacet réelle mesurée, la valeur de différence constatée étant transmise à une unité de calcul dans laquelle une grandeur de couple de rotation est calculée, cette grandeur servant à déterminer la pression produisant, via les freins du véhicule, un couple de lacet supplémentaire permettant d'emmener la vitesse angulaire de lacet mesurée jusqu'à la vitesse angulaire de lacet théorique correspondant à la trajectoire d'évitement.

8. Procédé selon l'une quelconque des revendications 1 à 4 ou plusieurs d'entre elles, **caractérisé en ce qu'**on calcule, à l'aide de la trajectoire d'évitement, un angle de braquage théorique du véhicule mis à disposition de la régulation de la stabilité directionnelle.

9. Procédé selon l'une quelconque des revendications précédentes ou plusieurs d'entre elles, **caractérisé en ce que** l'angle de braquage théorique est comparé à un angle de braquage réel déterminé, la valeur de différence constatée étant transmise à une unité de calcul dans laquelle une grandeur de réglage est calculée, cette grandeur servant à déterminer un angle de braquage réglé au niveau des roues via un système de braquage actif du véhicule et amenant l'angle de braquage réel calculé jusqu'à l'angle de braquage théorique correspondant à la trajectoire d'évitement.
